(19) **Europäisches Patentamt / European Patent Office / Office européen des brevets**

(11) **EP 2 956 564 B1**

(12) **FASCICULE DE BREVET EUROPEEN**

(45) Date de publication et mention
de la délivrance du brevet:
**14.08.2019 Bulletin 2019/33**

(21) Numéro de dépôt: **14705111.4**

(22) Date de dépôt: **13.02.2014**

(51) Int Cl.:
*C23C 4/02* *(2006.01)*   *C23C 4/06* *(2016.01)*
*C23C 4/18* *(2006.01)*   *C23C 4/129* *(2016.01)*
*G01B 21/30* *(2006.01)*

(86) Numéro de dépôt international:
**PCT/EP2014/052855**

(87) Numéro de publication internationale:
**WO 2014/125045 (21.08.2014 Gazette 2014/34)**

(54) **PROCEDE DE FABRICATION D'UNE PIECE D'AERONEF COMPORTANT UN SUBSTRAT ET UNE PIECE COMPORTANT UN SUBSTRAT RECOUVERT D'UNE COUCHE DE REVETEMENT**

VERFAHREN ZUR HERSTELLUNG EINES FLUGZEUGBAUTEILS MIT EINEM SUBSTRAT UND EINE KOMPONENTE BEINHALTEND EIN BESCHICHTETES SUBSTRAT

PROCESS FOR PRODUCING AN AIRCRAFT PART COMPRISING A SUBSTRATE AND A COMPONENT COMPRISING A SUBSTRATE COVERED BY A COATING LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2013 FR 1351336**

(43) Date de publication de la demande:
**23.12.2015 Bulletin 2015/52**

(73) Titulaire: **Safran Landing Systems**
**78140 Vélizy-Villacoublay (FR)**

(72) Inventeurs:
• **MONERIE-MOULIN, Francis**
**F-78140 Velizy-Villacoublay (FR)**

• **GAYDU, Régis**
**F-78140 Velizy-Villacoublay (FR)**

(74) Mandataire: **Lavialle, Bruno François Stéphane et al**
**Cabinet Boettcher**
**16, rue Médéric**
**75017 Paris (FR)**

(56) Documents cités:
**EP-A1- 1 788 108        EP-A1- 2 128 297**
**DE-A1-102011 103 731    FR-A1- 2 971 722**
**US-A1- 2009 162 670**

**Description**

L'invention est relative à un procédé de fabrication de pièces, telles que des pièces d'aéronautique, comportant un substrat au moins partiellement revêtu d'une couche de revêtement protégeant ce substrat.

ARRIERE PLAN DE L'INVENTION

On connait par exemple des procédés de fabrication de pièces comportant l'application sur un substrat métallique, via un bain métallique, d'une couche de revêtement chrome servant à la fois à protéger ce substrat et à lui conférer une rugosité fonctionnelle. On cherche à minimiser l'usage du chrome qui est nocif pour la santé et l'environnement. Des procédés de fabrication de pièces sont présentés dans les documents brevet DE102011103731 et FR2971722.

OBJET DE L'INVENTION

Un objet de la présente invention est de proposer un procédé de fabrication de pièce comportant un substrat et une couche de revêtement formée sur une surface de ce substrat, ce procédé permettant de minimiser et préférentiellement supprimer le besoin de chrome dans le revêtement.

RESUME DE L'INVENTION

L'invention porte essentiellement sur un procédé de fabrication de pièce conforme à l'objet de la revendication 1. L'invention concerne aussi une pièce conforme à la revendication 13.

Afin de s'assurer que l'épaisseur de revêtement formée est bien dans la plage d'épaisseur prédéterminée, on réalise plusieurs mesures unitaires par induction ou par courant de Foucault traduisant des valeurs d'épaisseurs minimales et maximales (creux de rugosité) de la couche. La valeur d'épaisseur de la couche retenue pour la mise en oeuvre du procédé de l'invention est une moyenne de ces différentes mesures unitaires, sachant qu'aucune des mesures unitaires ne doit dépasser une épaisseur de couche de 55$\mu$m.

Pour la compréhension de l'invention, la rugosité Ra est l'écart moyen arithmétique entre le profil de la surface dont on mesure la rugosité et la ligne moyenne du profil. Cette valeur de rugosité Ra est obtenue par une série de mesures le long du profil suivant une méthode présentée ci-après.

Par procédé de projection HVOF, on entend un procédé de projection d'un mélange pulvérulent contenant des grains à l'aide de gaz de combustion issus de la combustion d'un combustible avec un comburant. La vitesse et la température de ces gaz sont telles que les grains du mélange pulvérulent (ici des grains de carbure métallique) sont éjectées sur un substrat avec une énergie suffisante pour s'y accrocher et ainsi former une couche de revêtement du substrat. Typiquement dans un procédé de projection HVOF les gaz de combustion ont des vitesses supersoniques.

De manière surprenante, en combinant une faible épaisseur de couche (inférieure à 50$\mu$m et préférentiellement supérieure à 30$\mu$m), une faible taille de grains (dimensions strictement inférieures à 1$\mu$m et préférentiellement de l'ordre de 450nm à +/-50nm en granulométrie moyenne. La granulométrie moyenne étant la granulométrie d'au moins 50% de la masse de grains) et un niveau de rugosité Ra du substrat inférieur à 1,6$\mu$m, l'invention confère plusieurs avantages :

A réduction du risque de rupture / décrochage de la couche formée sur le substrat ;
B maintient d'un niveau de protection contre la corrosion ;
C réduction du temps de projection nécessaire à la réalisation de la couche et réduction de la masse de la couche ainsi formée.

On note également que l'invention permet de se passer d'une étape de rectification qui est traditionnellement utilisée pour ajuster la géométrie de la couche de revêtement et son état de surface. Ainsi, le procédé de l'invention permet de générer dès l'étape de projection, une épaisseur de couche directement à la cote souhaitée plus une légère surcote devant être retirée par polissage, sans devoir ajuster cette dimension par rectification. On note que l'étape de finition de la couche de revêtement par polissage permet d'enlever une épaisseur strictement inférieure à 20pm, préférentiellement de 5 à 10$\mu$m (valeur correspondante à la surcote) alors qu'une rectification enlève au minimum 30$\mu$m, ces deux opérations ne sont donc pas comparables dans leurs effets.

**A Sur la réduction du risque de rupture / décrochage de la couche par sollicitations mécaniques répétées.**

Sous l'effet de sollicitations mécaniques répétées de l'ensemble substrat/couche, la couche de revêtement à tendance à se fissurer dans le sens de son épaisseur puis, petit à petit, à se dé-laminer et se décrocher par plaques. Ce phénomène est connu sous le terme de « spalling » signifiant écaillage. Ce phénomène de « spalling » est favorisé par l'augmentation d'épaisseur de couche et par l'augmentation de la contrainte appliquée sur la couche. En conséquence et de manière surprenante le procédé de l'invention permet d'augmenter la résistance de la couche à la contrainte alors qu'il implique une réduction d'épaisseur de la couche.

On constate qu'en diminuant la taille des grains, on obtient une microstructure plus fine et plus résistante au « spalling » qu'avec des grains de tailles usuelles qui ont des granulométries moyennes supérieures à 5$\mu$m.

On constate qu'en réduisant l'épaisseur de la couche, on réduit aussi le phénomène de spalling car la couche a moins tendance à se fissurer transversalement et car l'effort de cisaillement cumulé transmis à l'interface est plus faible.

Ainsi, en limitant la taille des grains et l'épaisseur de couche et en ajustant la rugosité du substrat avant application de la couche, l'invention limite le risque d'écaillage.

Alors que traditionnellement l'épaisseur de couche est supérieure à 75$\mu$m, on constate qu'en diminuant son épaisseur en dessous de 50pm, l'invention permet de limiter la corrosion du substrat consécutive du spalling.

### B Sur le maintien, voir l'amélioration du niveau de protection contre la corrosion.

Comme indiqué précédemment, la couche de revêtement est obtenue en chauffant et en projetant le mélange pulvérulent sur le substrat à revêtir. Le mélange pulvérulent arrive sur le substrat sous la forme de gouttes à l'état fondues ou au moins ramolli.. Chaque goutte s'écrase/ s'aplatie sur le substrat et y forme une ou plusieurs particules lamellaires. Ces particules lamellaires sont communément connues par l'homme du métier sous le terme anglophone de « splats ». On constate qu'en limitant la taille moyenne des grains de carbure présents dans le mélange pulvérulent, on obtient une microstructure plus fine comportant un plus grand nombre de particules lamellaires qu'en projetant des grains de carbure de tailles moyennes supérieures.

Ainsi, la couche réalisée selon le procédé de l'invention qui a une épaisseur comprise entre 30 et 50$\mu$m et qui contient des grains de carbure métallique de dimensions inférieures à 450nm, préférentiellement de granulométrie moyenne égale à 400nm à +/-50nm, présente un nombre moyen de particules lamellaires superposées au moins égal à celui d'une couche de revêtement de 75$\mu$m obtenue avec des grains de plusieurs micromètres.

A épaisseur de couche constante, en augmentant le nombre moyen de particules lamellaires superposées, on réduit le risque d'apparition de passages au travers de la couche et par conséquent on maintient un niveau de protection contre la corrosion au moins équivalent à celui constaté pour une épaisseur de couche supérieure réalisée avec des grains de plusieurs micromètres.

### C Sur la réduction du temps de projection et de la masse de la couche formée.

En outre, en limitant l'épaisseur de la couche, l'invention permet d'alléger la masse de la pièce sans compromettre sa résistance à la corrosion.

Pour toutes ces raisons, le procédé selon l'invention est particulièrement adapté pour la production d'une tige d'atterrisseur d'aéronef qui doit être légère (pour permettre un gain de consommation de l'aéronef), résistante à des variations de charges mécaniques, résistante à des variations importantes de température, résistante à la corrosion, tout en limitant le risque d'apparition de « spalling » à l'origine de pollutions du fluide hydraulique par des particules issues du revêtement et de pertes d'étanchéité.

### BREVE DESCRIPTION DES DESSINS

L'invention sera mieux comprise à la lumière de la description qui suit d'un mode particulier de réalisation en référence aux figures annexées parmi lesquelles :

- la figure 1 montre une pièce réalisée avec le procédé de l'invention, en l'occurrence il s'agit d'une tige d'atterrisseur dont une portion de surface cylindrique est recouverte d'une couche de revêtement annulaire servant de protection contre la corrosion et de surface de glissement de joint ;
- la figure 2 est une vue en coupe transversale grossie d'une portion de la tige d'atterrisseur de la figure 1 montrant le substrat et la couche de revêtement ;
- la figure 3 est un logigramme illustrant les étapes du procédé selon l'invention.

### DESCRIPTION DETAILLEE DE L'INVENTION

Comme indiqué précédemment le procédé de fabrication selon l'invention est préférentiellement utilisé pour produire une tige d'atterrisseur 1. Cette tige d'atterrisseur est généralement réalisée à partir d'un brut forgé puis usiné pour présenter au moins une portion cylindrique droite. Cette portion cylindrique droite Sub est revêtue d'une couche de revêtement annulaire Rev destinée à recevoir en frottement des joints J pour permettre le coulissement de la tige 1 par rapport à un fût F de l'atterrisseur. Cette couche de revêtement Rev doit permettre à la fois une protection contre la corrosion de la tige 1 et une étanchéité entre la tige 1 et le fût F pour limiter le risque de fuites de fluide hydraulique.

On note que le substrat Sub est un alliage métallique de type acier ou titane.

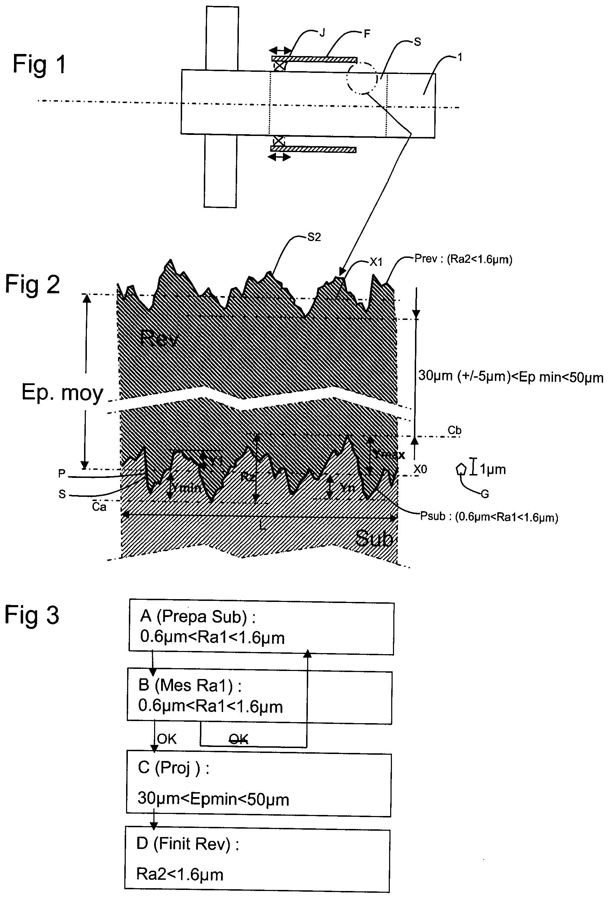

Comme on le voit à la figure 3, le procédé de fabrication de la pièce 1 comprend :

- la préparation A (Prepa Sub) d'une surface S à recouvrir du substrat Sub de manière à ce que sa rugosité Ra soit comprise entre 0.6 et 1.6$\mu$m et préférentiellement comprise entre 0.8 et 1.6$\mu$m ;
- la mesure B (Mes Ra1) pour s'assurer que la surface préparée a bien la rugosité Ra1 requise ; puis
- la formation C (Proj), sur la surface S préparée du substrat, de la couche de revêtement Rev, cette couche de revêtement Rev étant formée par projection Proj de type HVOF, d'un mélange pulvérulent contenant des grains G de carbure métallique, ces grains G ayant des dimensions strictement inférieures à 1$\mu$m et l'épaisseur Ep min de la couche de revêtement Rev ainsi formée étant inférieure à 50μm et supérieure à 30μm; puis

- la finition par polissage D (Finit Rev) d'au moins une surface S2 de ladite couche de revêtement Rev de manière à assurer que sa rugosité Ra soit inférieure à 1.6μm (la rugosité Ra de la couche de revêtement Rev est notée Ra2).

L'étape de préparation A de la surface S du substrat Sub est réalisée par sablage.

L'étape de formation C de la couche de revêtement est réalisée en projetant un mélange pulvérulent par HVOF. Ce mélange pulvérulent contient des grains de carbure métallique enrobés dans un liant, en l'occurrence du carbure de tungstène WC enrobés dans du cobalt Co et du Chrome Cr. Le cobalt Co sert de liant et le chrome Cr sert de protection contre l'oxydation. Ce mélange pulvérulent se présente sous la forme d'agglomérats / agrégats de granulométrie maximale inférieure à 50μm et préférentiellement de granulométrie moyenne comprise entre 10μm et 30μm (plus de 50% de la masse du mélange pulvérulent est composée d'agrégats de granulométrie comprise entre 10 et 30μm). Les agglomérats sont généralement réalisés par frittage pour créer des pontages entre le carbure et le matériau liant. Ce frittage est généralement réalisé avec un four pour fondre le liant sans décarburer les grains de carbure métallique.

Idéalement, les grains de carbure métallique WC présents dans ce mélange pulvérulent sont calibrés pour avoir des dimensions strictement inférieures à 450nm. Idéalement la granulométrie moyenne des grains est de 400nm a +/- 50nm.

Après formation de la couche de revêtement Rev d'épaisseur souhaitée, on réalise l'opération de polissage D (Finit Rev) par toilage. Cette étape permet de décrocher les grains mal accrochés et garantir le niveau de rugosité Ra2 inférieur à 1,6μm. Lors du polissage, la couche est réduite d'au plus 10μm. Ainsi, l'épaisseur minimale Ep. Min de la couche Rev après polissage est supérieure à 20μm.

La couche de revêtement annulaire ainsi formée contient des grains de carbure(s) métallique(s), de tailles exclusivement inférieures à 1μm et un liant cobalt, chrome. On note que la présente invention peut être mise en oeuvre avec d'autres types de compositions chimiques contenant au moins un carbure métallique et au moins un liant. Parmi des exemples de compositions possibles, on peut avoir du WCCo pouvant se présenter sous forme d'un mélange de 83% de WC et de 17% de Co ou sous forme d'un mélange de 88% de WC et de 12% de Co ou du WCCrC Ni.

Il est à noter que traditionnellement, une étape de rectification de la couche est requise pour obtenir une géométrie de couche et un état de surface de couche donné.

Or, la rectification d'une couche annulaire formée sur une portion cylindrique droite, impose de prévoir une épaisseur de couche importante pour garantir qu'après rectification, une épaisseur minimale de couche est maintenue sur le substrat.

En supprimant l'étape de rectification de la couche annulaire, le procédé selon l'invention permet d'obtenir directement l'épaisseur de couche souhaitée sans avoir à rectifier la pièce, éliminant ainsi le risque d'apparition de défauts de rectification (La rectification d'une couche annulaire cylindrique conduit fréquemment, du fait des incertitudes de positionnement de la pièce sur la rectifieuse, à l'apparition de zones de couche trop minces, difficilement détectables et susceptibles de favoriser une corrosion prématurée du substrat). L'invention permet de supprimer ce risque d'avoir une couche localement trop mince non détectable.

Comme on le voit sur la figure 3, préalablement à la formation de la couche de revêtement Rev sur le substrat Sub, on réalise une mesure B (Mes Ra1) de la rugosité Ra1 de la surface S du substrat Sub. Si cette rugosité mesurée Ra1 est comprise entre des seuils minimum et maximum prédéterminés, alors on autorise la formation de la couche de revêtement Rev. A contrario, si cette rugosité mesurée de la surface S du substrat est inférieure au seuil minimum prédéterminé ou supérieure au seuil maximum prédéterminée alors on continue la préparation de la surface S jusqu'à ce qu'elle présente une rugosité comprise entre les seuils minimum et maximum prédéterminés.

Le seuil minimum est de 0.6pm ou préférentiellement de 0.8μm et le seuil maximum de rugosité est de 1,6μm. Le seuil minimum est fixé pour permettre une bonne accroche des grains G projetés sur la surface S.

Le seuil maximum est fixé pour limiter la dégradation de la surface S2 du revêtement Rev du fait de défauts de rugosité R1 de la surface S du substrat Sub. Comme la couche de revêtement Rev est fine (moins de 50μm), et que les grains ont une faible granulométrie (moins de 1μm) relativement aux valeurs de rugosité Ra recherchées (moins de 1,6μm), la rugosité de la surface S2 obtenue après la projection HVOF est sensiblement identiques à la rugosité de la surface R1 de la surface S. Ceci explique l'intérêt de fixer le seuil maximum de rugosité R1 de S à 1, 6μm qui est le seuil de rugosité souhaité pour la surface S2 du revêtement Rev. Un simple polissage de la surface S2 du revêtement permet d'obtenir la rugosité cherchée de 1,6μm.

Ainsi, la tige d'atterrisseur d'aéronef obtenue avec le procédé de l'invention présente une zone cylindrique de revêtement Rev de dureté Vickers supérieure à 950 Hv ce qui est suffisant pour limiter l'usure au frottement du joint J.

Par ailleurs, en limitant l'épaisseur de la couche à 50μm et préférentiellement entre 30 et 50μm, on a en moyenne une superposition d'au moins 20 grains enrobés de 1μm. Avec une telle superposition on obtient une protection contre la corrosion compatible avec une exposition de la pièce à au moins 500 heures en brouillard salin.

**Sur le mode de mesure de la rugosité Ra** :

Pour rappel, la rugosité Ra d'une surface est un écart moyen arithmétique du profil de cette surface par rapport à une ligne moyenne X0 du profil de longueur L. La valeur Ra est donnée par la formule :

$$Ra = \frac{1}{L}\int_0^L \left| y(x) \right| dx$$

où :

L représente la longueur de base du profil mesuré ;
n représente le nombre de mesures du profil effectuées sur la longueur de profil L ; et
y(x) est la distance entre la ligne moyenne X0 du profil et le profil à l'endroit du profil d'abscisse x (x variant de 0 à L).

La ligne moyenne X0 est une droite ayant la direction générale du profil sur la longueur de profil dont on mesure la rugosité. Comme on le voit sur la figure 2, cette ligne X0 divise le profil de telle sorte que sur la longueur de base L, la somme des carrés des écarts entre le profil et cette ligne soit minimale (« ligne des moindres carrés »). En d'autres termes, cette ligne X0 est positionnée de telle manière, sur la longueur L, suivant le plan de coupe transversal du profil, la somme des aires comprises entre la ligne moyenne X0 et le profil est égale de part et d'autre de la ligne X0.

Cette valeur de Ra peut aussi être approximée avec la formule suivante :

$$Ra \approx \frac{\left| y1 \right| + ..... + \left| yn \right|}{n}$$

Où :

yn est la distance entre la ligne moyenne X0 du profil et le profil mesurée lors d'une nième mesure. Le nombre de mesures allant de 1 à n sur la longueur L du profil mesuré. L'un ou l'autre des modes de mesures de la rugosité Ra peut être utilisé pour mettre en oeuvre l'invention, mais on préfère ce dernier mode car il ne nécessite pas une mesure continue du profil.

Sur la figure 2, qui représente une vue en coupe du profil Psub du substrat Sub, on a représenté des valeurs mesurées y1 et yn d'écart de profil P par rapport à la ligne moyenne X0 ainsi que les valeurs Ymin et Ymax.

Ymin correspond à l'écart maximum constaté entre la ligne de creux Ca du profil P et Xo.

Ymax correspond à l'écart maximum constaté entre la ligne de saillie Cb du profil de substrat et X0.

Rz hauteur maximale du profil égale à Ymin+Ymax. X1 est la ligne moyenne du profil du revêtement Rev.

Comme indiqué précédemment et de manière surprenante, en ajustant la rugosité du substrat et en réduisant l'épaisseur de la couche, on constate que la couche résiste mieux au « spalling » que ne le ferait une couche d'épaisseur supérieure.

Grâce à toutes ces caractéristiques le procédé de l'invention permet d'obtenir une pièce finie plus légère, moins couteuse et plus résistante tout en conservant intacte les caractéristiques nécessaires à une bonne étanchéité entre la pièce 1 et les joints J.

Il est a noter que les grains de carbure utilisés peuvent être dans un autre type de carbure métallique que le carbure de tungstène et les matériaux liants peuvent être en d'autres matières que le Chrome et le Cobalt.

## Revendications

1. Procédé de fabrication d'une pièce (1) comportant un substrat métallique (Sub) au moins partiellement recouvert d'une couche de revêtement (Rev), le procédé comprenant :

   - la préparation (A) d'une surface à recouvrir du substrat (Sub) pour obtenir une surface préparée de rugosité Ra comprise entre 0.6 et 1.6 $\mu$m ;
   - la formation (C), sur la surface préparée du substrat, de la couche de revêtement (Rev), cette couche de revêtement (Rev) étant formée par projection, selon un procédé de projection de type HVOF, d'un mélange pulvérulent contenant des grains (G) de carbure métallique, ces grains (G) ayant des dimensions strictement inférieures à 450nm et l'épaisseur (Ep min) de la couche de revêtement (Rev) ainsi formée étant inférieure à 50 $\mu$m ; puis
   - la finition par polissage (D) d'au moins une surface de ladite couche de revêtement (Rev) de manière à assurer que sa rugosité Ra soit inférieure à 1.6 $\mu$m.

2. Procédé selon la revendication 1, dans lequel ladite préparation (A) de surface à recouvrir est prévue pour obtenir une surface préparée de rugosité Ra comprise entre 0.8 et 1.6 $\mu$m.

3. Procédé selon l'une quelconque des revendications 1 ou 2, dans lequel la préparation (A) de la surface de substrat (Sub) à recouvrir est réalisée par sablage.

4. Procédé selon l'une quelconque des revendications 1 à 3, dans lequel la couche de revêtement formée à une épaisseur comprise entre 30 $\mu$m et 50 $\mu$m.

5. Procédé selon la revendication 4, dans lequel la pièce est une tige d'atterrisseur d'aéronef, la couche de revêtement étant annulaire et recouvrant une portion cylindrique droite de la pièce.

**6.** Procédé selon l'une quelconque des revendications 1 à 5, dans lequel préalablement à la formation de la couche de revêtement (rev) sur le substrat (Sub), on réalise une mesure (B) de la rugosité (Ra1) de la surface (S) du substrat (Sub) et si cette rugosité mesurée est comprise entre des seuils minimum et maximum prédéterminés, alors on autorise la formation de la couche de revêtement, si cette rugosité mesurée de la surface du substrat est inférieure au seuil minimum prédéterminé ou supérieure au seuil maximum prédéterminée alors on continue la préparation de la surface jusqu'à ce qu'elle présente une rugosité (Ra1) mesurée comprise entre les seuils minimum et maximum prédéterminés.

**7.** Procédé selon l'une quelconque des revendications 1 à 6, dans lequel l'alliage métallique du substrat (Sub) est un alliage acier ou un alliage titane.

**8.** Procédé selon l'une quelconque des revendications 1 à 7, dans lequel l'opération de polissage (D) est réalisée par toilage à l'aide d'un abrasif.

**9.** Procédé selon l'une quelconque des revendications précédentes, dans lequel le mélange pulvérulent est constitué d'un carbure métallique et d'un liant de ce carbure.

**10.** Procédé selon la revendication 9 dans lequel le carbure métallique est du WC et le liant comprend du Co et Cr.

**11.** Procédé selon la revendication précédente, dans lequel le mélange pulvérulent se présente sous forme d'agglomérats de granulométrie maximale inférieure à 50$\mu$m.

**12.** Procédé selon la revendication précédente, dans lequel au moins 50% de la masse du mélange pulvérulent étant constituée d'agglomérats de granulométrie comprise entre 10$\mu$m et 30$\mu$m.

**13.** Pièce (1) comportant un substrat métallique (Sub) au moins partiellement recouvert d'une couche de revêtement (Rev), la pièce comprenant :

- une surface préparée de substrat (Sub) de rugosité Ra comprise entre 0.6 et 1.6$\mu$m ;
- une couche de revêtement (Rev) formée sur la surface préparée du substrat, cette couche de revêtement (Rev) étant formée par projection de type HVOF, d'un mélange pulvérulent contenant des grains (G) de carbure métallique, ces grains (G) ayant des dimensions strictement inférieures à 450nm et l'épaisseur (Ep min) de la couche de revêtement (Rev) ainsi formée étant inférieure à 50$\mu$m; puis
- au moins une surface de ladite couche de revêtement (Rev) ayant une rugosité Ra inférieure à 1.6$\mu$m.

**Patentansprüche**

**1.** Verfahren zur Herstellung eines Teils (1), das ein Metallsubstrat (Sub) umfasst, das zumindest teilweise von einer Überzugsschicht (Rev) überzogen ist, wobei das Verfahren umfasst:

- die Präparation (A) einer zu überziehenden Oberfläche des Substrats (Sub), um eine präparierte Oberfläche mit einer Rauheit Ra zu erhalten, die zwischen 0,6 und 1,6$\mu$m liegt;
- die Bildung (C) der Überzugsschicht (Rev) auf der präparierten Oberfläche des Substrats, wobei diese Überzugsschicht (Rev) durch Spritzen gemäß einem Spritzverfahren der Art HVOF einer pulverförmigen Mischung gebildet wird, die Körner (G) aus Metallkarbid enthält, wobei diese Körner (G) Abmessungen haben, die streng kleiner als 450nm sind, und die Dicke (Ep min) der so gebildeten Überzugsschicht (Rev) kleiner als 50$\mu$m ist; und dann
- die Feinbearbeitung mittels Polieren (D) mindestens einer Oberfläche der genannten Überzugsschicht (Rev) derart, dass sichergestellt wird, dass seine Rauheit Ra kleiner als 1,6$\mu$m ist.

**2.** Verfahren nach Anspruch 1, bei dem die genannte Präparation (A) der zu überziehenden Oberfläche vorgesehen wird, um eine präparierte Oberfläche mit einer Rauheit Ra zu erhalten, die zwischen 0,8 und 1,6$\mu$m liegt.

**3.** Verfahren nach einem der Ansprüche 1 oder 2, bei dem die Präparation (A) der Oberfläche des zu überziehenden Substrats (Sub) mittels Sandstrahlen erfolgt.

**4.** Verfahren nach einem der Ansprüche 1 bis 3, bei dem die gebildete Überzugsschicht eine Dicke hat, die zwischen 30$\mu$m und 50$\mu$m liegt.

**5.** Verfahren nach Anspruch 4, bei dem das Teil eine Luftfahrzeugfahrwerksstange ist, wobei die Überzugsschicht ringförmig ist und einen geradlinigen zylindrischen Abschnitt des Teils überzieht.

**6.** Verfahren nach einem der Ansprüche 1 bis 5, bei dem vor der Bildung der Überzugsschicht (Rev) auf dem Substrat (Sub) eine Messung (B) der Rauheit (Ra1) der Oberfläche (S) des Substrats (Sub) durchgeführt wird, und wenn diese gemessene Rauheit zwischen einem vorbestimmten Mindestschwellwert und einem vorbestimmten Höchstschwellwert liegt, dann die Bildung der Überzugsschicht gestattet wird, und wenn diese gemessene Rauheit der Oberfläche des Substrats kleiner als der vorbestimmte Mindestschwellwert oder größer als der vorbestimmte Höchstschwellwert ist, dann die Präparation der Oberfläche fortgesetzt wird, bis sie eine gemessene Rauheit (Ra1) aufweist, die zwischen dem vorbestimmten Mindestschwellwert und dem vorbestimmten Höchstschwellwert liegt.

7. Verfahren nach einem der Ansprüche 1 bis 6, bei dem die Metalllegierung des Substrats (Sub) eine Stahllegierung oder eine Titanlegierung ist.

8. Verfahren nach einem der Ansprüche 1 bis 7, bei dem der Poliervorgang (D) mittels Bandschleifen mit Hilfe eines Schleifmittels erfolgt.

9. Verfahren nach einem der vorhergehenden Ansprüche, bei dem die pulverförmige Mischung aus Metallkarbid und einem Bindemittel für dieses Karbid gebildet wird.

10. Verfahren nach Anspruch 9, bei dem das Metallkarbid WC ist und das Bindemittel Co und Cr umfasst.

11. Verfahren nach dem vorhergehenden Anspruch, bei dem die pulverförmige Mischung in Form von Agglomeraten mit einer maximalen Korngröße von kleiner als 50$\mu$m vorliegt.

12. Verfahren nach dem vorhergehenden Anspruch, bei dem mindestens 50% der Masse der pulverförmigen Mischung aus Agglomeraten mit einer Korngröße zwischen 10$\mu$m und 30$\mu$m gebildet sind.

13. Teil (1), umfassend ein Metallsubstrat (Sub), das zumindest teilweise von einer Überzugsschicht (Rev) überzogen ist, wobei das Teil umfasst:

> - eine präparierte Oberfläche des Substrats (Sub) mit einer Rauheit Ra zwischen 0,6 und 1,6$\mu$m;
> - eine Überzugsschicht (Rev), die auf der präparierten Oberfläche des Substrats gebildet ist, wobei diese Überzugsschicht (Rev) durch Spritzen der Art HVOF einer pulverförmigen Mischung gebildet ist, die Körner (G) aus Metallkarbid enthält, wobei diese Körner (G) Abmessungen haben, die streng kleiner als 450nm sind, und die Dicke (Ep min) der so gebildeten Überzugsschicht kleiner als 50$\mu$m ist; und dann
> - mindestens eine Oberfläche der genannten Überzugsschicht (Rev), die eine Rauheit Ra hat, die kleiner als 1.6$\mu$m ist.

**Claims**

1. A method of fabricating a part (1) comprising a metal substrate (Sub) at least partially covered in a coating layer (Rev), the method comprising:

> • preparing (A) a surface of the substrate (Sub) for covering in order to obtain a prepared surface of roughness Ra lying in the range 0.6 $\mu$m to 1.6 $\mu$m;
> • forming (C) the coating layer (Rev) on the prepared surface of the substrate, this coating layer (Rev) being formed by spraying, using an HVOF type spraying method to spray a powder mixture containing grains (G) of metal carbide, the grains (G) having dimensions that are strictly less than 450nm and the thickness (Ep min) of the coating layer (Rev) as formed in this way being less than 50 pm; then
> • finishing at least one surface of said coating layer (Rev) by polishing (D) in such a manner as to ensure that its roughness Ra is less than 1.6 $\mu$m.

2. A method according to claim 1, wherein said preparation (A) of the substrate surface (Sub) for covering is performed so as to obtain a prepared surface of roughness Ra lying in the range 0.8 $\mu$m to 1.6 $\mu$m.

3. A method according to claim 1 or 2, wherein the preparation (A) of the substrate surface (Sub) for covering is performed by sand blasting.

4. A method according to any one of claims 1 to 3, wherein the coating layer that is formed has thickness lying in the range 30 $\mu$m to 50 $\mu$m.

5. A method according to claim 4, wherein the part is an aircraft landing gear rod, the coating layer being annular and covering a right cylindrical portion of the part.

6. A method according to any one of claims 1 to 5, wherein, prior to forming the coating layer (Rev) on the substrate (Sub), the roughness (Ra1) of the surface (S) of the substrate (Sub) is measured (B), and if this measured roughness lies between predetermined minimum and maximum thresholds, then the coating layer can be formed, whereas if this measured roughness of the substrate surface is less than the predetermined minimum threshold or greater than the predetermined maximum threshold, then preparation of the surface is continued until it presents measured roughness (Ra1) lying between the predetermined minimum and maximum thresholds.

7. A method according to any one of claims 1 to 6, wherein the metal alloy of the substrate (Sub) is a steel alloy or a titanium alloy.

8. A method according to any one of claims 1 to 7, wherein the polishing operation (D) is performed by means of a belt using an abrasive.

9. A method according to any preceding claim, wherein the powder mixture is constituted by a metal carbide and a binder for the carbide.

10. A method according to claim 9, wherein the metal carbide is WC and the binder comprises Co and Cr.

11. A method according to the preceding claim, wherein the powder mixture is in the form of agglomerates having a maximum grain size of less than 50 μm.

12. A method according to the preceding claim, wherein, at least 50% of the weight of the powder mixture being constituted by agglomerates of grain size lying in the range 10 μm to 30 μm.

13. A part (1) comprising a metal substrate (Sub) at least partially covered in a coating layer (Rev), the part comprising:

> • a prepared surface of the substrate (Sub) having a roughness Ra lying in the range 0.6 μm to 1.6 μm;
> • a coating layer (Rev) formed on the prepared surface of the substrate, this coating layer (Rev) being formed by an HVOF type spraying method of a powder mixture containing grains (G) of metal carbide, these grains (G) having dimensions that are strictly less than 450nm and the thickness (Ep min) of the coating layer (Rev) as formed in this way being less than 50 pm; then
> • at least one surface of said coating layer (Rev) having a roughness Ra inferior to 1.6 μm.

**Fig 1**

J F S 1

**Fig 2**

S2 X1 Prev : (Ra2<1.6µm)

Prev

Ep. moy

30µm (+/-5µm)<Ep min<50µm

Cb

rmax

P

X0

1µm

S

G

Ca

Psub : (0.6µm<Ra1<1.6µm)

L Sub

**Fig 3**

| A (Prepa Sub) :<br>0.6µm<Ra1<1.6µm |
|---|

| B (Mes Ra1) :<br>0.6µm<Ra1<1.6µm |
|---|

OK   ~~OK~~

| C (Proj ) :<br>30µm<Epmin<50µm |
|---|

| D (Finit Rev) :<br>Ra2<1.6µm |
|---|

**EP 2 956 564 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011103731
- FR 2971722